# FASCICULE DE BREVET EUROPEEN

(11) **EP 2 983 049 B1**
(45) Date de publication et mention de la délivrance du brevet: **18.12.2019**
(21) Numéro de dépôt: 15172735.1
(22) Date de dépôt: 18.06.2015
(51) Int. Cl.: G05B 19/042, G05B 15/02, G06F 3/0481, G06F 3/0484

(54) **PROCEDE DE FONCTIONNEMENT D'UN DISPOSITIF DE COMMANDE D'UNE INSTALLATION DOMOTIQUE D'UN BATIMENT ET DISPOSITIF DE COMMANDE**
BETRIEBSVERFAHREN EINER STEUERVORRICHTUNG EINER HEIMINSTALLATION EINES GEBÄUDES, UND ENTSPRECHENDE STEUERVORRICHTUNG
METHOD FOR OPERATING A DEVICE FOR CONTROLLING A HOME AUTOMATION INSTALLATION OF A BUILDING AND CONTROL DEVICE

(30) Priorité: 20.06.2014 FR 1455713
(43) Date de publication de la demande: 10.02.2016
(73) Titulaire: SOMFY ACTIVITES SA, 74300 Cluses (FR)
(72) Inventeur: DUCHENE, Isabelle, 74970 MARIGNIER (FR); DEVIS, Frédéric, 74330 EPAGNY (FR); COGNE, Pierre-Yves, 74250 BOGEVE (FR)
(74) Mandataire: Novaimo

(56) Documents cités:
- EP-A1- 2 482 150
- EP-A2- 2 631 723

## Description

La présente invention concerne un procédé de fonctionnement d'un dispositif de commande d'une installation domotique d'un bâtiment, un dispositif de commande d'une installation domotique d'un bâtiment et une telle installation.

De manière générale, la présente invention concerne le domaine des installations domotiques. Une installation domotique est généralement conçue de sorte à mettre en fonctionnement des équipements domotiques, tels que par exemple des dispositifs de fermeture, d'occultation ou de protection solaire comprenant un dispositif d'entraînement motorisé mettant en mouvement un écran entre au moins une première position et une deuxième position, des dispositifs d'éclairage, des dispositifs de chauffage et/ou un dispositif de sécurité anti-intrusion, en utilisant des données recueillies par des capteurs, tels que par exemple des capteurs de température, de luminosité, de vent, d'humidité, de présence, d'ouverture et/ou de fumée.

Un dispositif d'entraînement motorisé d'un dispositif de fermeture, d'occultation ou de protection solaire comprend un actionneur électromécanique d'un écran ou élément mobile de fermeture, d'occultation ou de protection solaire tel qu'un volet, une porte, une grille, un store, ou tout autre matériel équivalent.

Une installation domotique comprend également un dispositif de commande. Le dispositif de commande comprend au moins une unité de commande locale, pouvant émettre des ordres à destination de différents équipements, en liaison filaire ou sans fil, de sorte à commander les équipements domotiques de l'installation domotique. Les unités de commande locales sont associées respectivement à chacun des équipements domotiques de l'installation domotique. Les équipements domotiques correspondent ainsi à des charges électriques pouvant être commandées à distance.

Le dispositif de commande comprend également un terminal, le terminal comportant un dispositif d'entrée de données et un dispositif d'affichage. Le terminal est classiquement une tablette tactile permettant notamment de saisir des données d'entrée pour mettre en fonctionnement les équipements domotiques et d'afficher un état de fonctionnement de ces équipements domotiques.

On connaît déjà des dispositifs de commande d'une installation domotique. Ces dispositifs de commande comprennent un terminal muni d'un dispositif d'entrée de données et un dispositif d'affichage, le dispositif d'affichage ayant un écran de représentation graphique des différents équipements sous forme d'icônes. Le terminal est par exemple un écran tactile qui regroupe de fait le dispositif d'entrée de données et le dispositif d'affichage. Le dispositif de commande est configuré de sorte à commander le fonctionnement des équipements domotiques, en particulier en utilisant des scénarios ou scènes, qui sont un ensemble d'ordres fournis à un ou plusieurs équipements choisis pour participer au scénario, les ordres étant exécutés simultanément ou de manière successive.

Il est également connu de donner la possibilité à un utilisateur de programmer ses propres scénarios, notamment en utilisant une banque de données d'icônes représentant des équipements et/ou des ordres possibles, tels que « ouverture », « fermeture ». Ces scénarios, associés à un horaire, sont alors mis en oeuvre lorsque l'heure courante correspond à l'heure programmée du scénario. Le document EP 2 482 150 A1 décrit un tel procédé de fonctionnement d'un dispositif de commande d'une installation domotique d'un bâtiment et de l'environnement du bâtiment.

La présente invention a pour but d'améliorer les dispositifs de commande de l'art antérieur et de proposer un procédé de fonctionnement d'un dispositif de commande d'une installation domotique équipant un bâtiment et l'environnement de ce bâtiment, et un procédé de commande associé, permettant de simplifier la création et l'affichage d'ordres de commande conditionnels complexes. En particulier, la présente invention permet d'optimiser la fourniture de multiples conditions et actions.

A cet effet, la présente invention vise, un procédé de fonctionnement d'un dispositif de commande d'une installation domotique d'un bâtiment et de l'environnement du bâtiment. L'installation domotique comprend une pluralité d'équipements domotiques et de capteurs placés dans des zones de vie à l'intérieur et/ou à l'extérieur du bâtiment. Le dispositif de commande comprend un dispositif d'entrée de données et un dispositif d'affichage. Le dispositif d'affichage comprend un écran de représentation graphique. Le dispositif de commande est configuré de sorte à commander le fonctionnement des équipements domotiques et communiquer avec les capteurs. Le procédé comprend au moins les étapes de configuration d'un automatisme suivantes :
- sélection d'une icône représentant une première condition de mise en œuvre d'une action relative à l'installation parmi un ensemble proposé d'icônes de conditions,
- positionnement de la première condition sélectionnée dans une table matricielle accueillant les icônes de conditions,
- sélection d'une icône représentant une deuxième condition de mise en oeuvre d'une action relative à l'installation,
- positionnement de l'icône représentant la deuxième condition sur une même ligne ou une même colonne que l'icône représentant la première condition dans la table matricielle.

La présente invention vise à proposer des ordres de commande multi-conditionnels, avec des conditions multiples, notamment en proposant des conditions séparées par des ET logiques et des conditions séparées par des OU logiques. La sélection et le positionnement des conditions est faite de manière très ergonomique pour l'utilisateur, qui sélectionne une icône représentative d'une condition parmi un ensemble d'icônes et la positionne dans une matrice. L'automatisme est ainsi défini par au moins deux conditions de mise en oeuvre d'une action (qui peuvent être combinées par un ET ou par un OU logique), ainsi que par l'action correspondante. La sélection de l'action correspondante (ou des actions correspondantes) est définie lors d'une étape de sélection.

En dehors de la clarté apportée par la mise en forme matricielle du jeu de conditions, cette configuration permet une logique de programmation très simple pour l'utilisateur ainsi que pour la récupération d'information par le dispositif de commande.

Les première et deuxième conditions sont séparées par un OU logique et/ou les première et deuxième conditions peuvent être séparées par un ET logique selon si les icônes de conditions sont positionnées respectivement en ligne ou en colonne.

Dans la table matricielle, les lignes peuvent représenter les conditions séparées par des OU logiques, les colonnes peuvent représenter les conditions séparées par des ET logiques.

La sélection de l'icône représentant la deuxième condition peut être dépendante de la première condition sélectionnée.

Le choix d'une première condition peut établir une restriction sur le choix possible d'une deuxième condition devant s'appliquer à la même action ou au même groupe d'actions. Un premier exemple particulier peut être envisagé : si la première condition et la deuxième condition sont séparées par un OU logique, alors elles doivent être de même type. Un deuxième exemple particulier peut être envisagé : si la première condition et la deuxième condition sont séparées par un ET logique, alors elles doivent être de type différent, notamment dans le cas où la condition est relative à un même objet (par exemple une condition de température mesurée par un même capteur). De manière optionnelle, l'ensemble d'icône peut être déterminé par le dispositif de commande. En particulier dans le choix d'une deuxième condition, l'ensemble d'icônes proposé, que l'utilisateur peut sélectionner, est défini par le dispositif de commande pour qu'il ne puisse y avoir de contradiction entre la première et la deuxième condition. Ainsi, le deuxième ensemble d'icônes peut être identique, ou plus restreint, que le premier ensemble d'icônes. Dans le cas où le deuxième ensemble d'icône reste identique au premier ensemble d'icône, il peut s'agir d'un cas où la première condition aura été définie comme compatible avec toutes les autres conditions. Le procédé pourra comprendre une étape de refus de positionner une deuxième icône si celle-ci n'est pas conforme aux règles de restriction.

Les étapes de sélection et de positionnement peuvent être réitérées autant de fois que le nombre de conditions désiré pour la mise en œuvre de l'action.

L'écran d'affichage peut permettre de sélectionner des icônes de conditions, qu'il sera possible d'affecter à des emplacements dédiés, soit de telle sorte que les conditions soient séparées par des ET logiques, soit qu'elles soient séparées par des OU logiques.

Le nombre de conditions possibles, séparées par un ET logique, peut être inférieur ou égal à 3.

Dans un dispositif où l'utilisateur a la possibilité de sélectionner diverses conditions, il peut être nécessaire de limiter les alternatives conditions possibles de sorte à limiter les possibilités de sélectionner des conditions contradictoires. Le nombre de conditions possibles séparées par un OU logique, peut également être limité à 3, voire limité à 2. La plupart du temps, 2 conditions séparées par un OU logique seront suffisantes. Ainsi, sur une condition relative à la température, il sera possible de sélectionner 2 ou 3 plages de températures qui seront à l'origine de la mise en œuvre de mêmes actions. Ainsi, le nombre total de conditions possibles reste important tout en structurant ces diverses possibilités. La table matricielle comporte ainsi préférentiellement 3 lignes et 2 colonnes.

Une condition peut être choisie parmi des types de conditions définis relativement à des informations suivantes:
- information de temps ou horaire,
- information météorologique ou climatique,
- information de position ou de statut d'un équipement de l'installation, par exemple position d'une extrémité inférieure d'un écran ou statut ouvert ou fermé d'un écran,
- information de mesure ou de statut d'un capteur,
- information relative à un utilisateur
- information de localisation, notamment information de localisation géographique d'un élément de commande, en particulier information de position géographique d'une unité de commande distante.

Le procédé peut comprendre au moins une étape de paramétrage de la première condition et/ou de la deuxième condition sélectionnée.

Le procédé peut comprendre au moins une étape de sélection et de positionnement d'une icône représentant une première action relative à l'installation parmi un premier ensemble proposé d'actions.

L'étape de sélection d'une action peut être réalisée avant les étapes de sélection des conditions relatives à cette action. Ceci participe à une démarche intellectuelle visant à définir le résultat souhaité (l'action ou les actions à mettre en œuvre), puis à définir dans quelle mesure ce résultat doit être mis en œuvre. Par exemple, on souhaite être réveillé par une ouverture progressive du volet et une mise en route du chauffage. Ces actions pourront donc être sélectionnées. Ensuite, l'utilisateur pourra sélectionner les conditions telles que l'heure de réveil, quels jours ces actions doivent être réalisées et si le fonctionnement doit être lié à une température extérieure particulière par exemple, pour éviter d'ouvrir les volets par grand froid. Alternativement, la sélection des actions peut être postérieure aux étapes de sélection des conditions. Ceci permet une démarche intellectuelle inverse, dans laquelle des conditions environnantes sont définies, l'action sélectionnée a posteriori étant une réponse à ces conditions environnantes. Par exemple, on peut souhaiter mettre en œuvre une régulation thermique dans le bâtiment, dans les cas où la température intérieure est inférieure à 3° en hiver et si une personne est présente dans la maison. Les conditions de température, de saisonnalité, de présence peuvent donc être sélectionnées. Puis, l'utilisateur définit quelle réponse donner à ces conditions : fermer les volets roulants des façades Nord, Est et Ouest et augmenter la température de consigne du chauffage d'1°C.

De manière alternative, les étapes de sélection d'actions et de sélections de conditions peuvent être réalisées sans définir d'ordre.

L'étape de sélection et de positionnement d'une action peut être réitérée autant de fois que le nombre d'action désiré pour un même ensemble de conditions.

De la même manière que pour les conditions, le nombre d'actions possible pourra être limité à 3. Ceci permet de générer un affichage des ordres de commande multi-conditionnels sous un seul format et d'éviter de redimensionner l'affichage lorsque le nombre de conditions et/ou d'actions augmente. Ceci permet ainsi de définir des ressources matérielles et logicielles, notamment la taille de l'écran, adaptées à l'affichage du nombre maximum de possibilités, qui soient uniques quelles que soient les sélections de conditions et/ou d'actions.

La sélection d'une deuxième action peut être dépendante de la première action sélectionnée.

De manière à limiter les contradictions entre différentes actions associées à un même jeu de conditions, il pourra être déterminé que les différentes actions sélectionnées ne peuvent être que de types différents. On peut alternativement ne mettre cette contrainte que pour un type d'action, par exemple, la sélection d'un scénario. Ainsi, on peut garder la possibilité de pouvoir commander différents équipements indépendants, sans nécessairement créer de groupe spécifique à un ordre de commande multi-conditionnel.

Une action peut être choisie parmi les types d'actions suivants :
- changement d'état d'un équipement, activation d'un mode de fonctionnement préprogrammé de l'installation,
- lancement d'un scénario,
- envoi d'une alerte.

Les étapes de sélection et de positionnement peuvent comprendre une étape de glisser-déposer d'une icône d'un ensemble vers une zone d'affichage.

On vise ici la simplicité de programmation par rapport notamment à des menus à listes déroulantes. La même icône peut être réutilisée à la fois dans les options possibles et dans l'affichage des conditions sélectionnées lors de la création ou programmation d'un automatisme. Ceci permet une cohérence graphique ainsi qu'une limitation des ressources logicielles.

L'étape de sélection peut impliquer l'ouverture d'une fenêtre graphique séparée comprenant des informations de paramétrage. L'étape de paramétrage n'est pas obligatoirement réalisée à l'issue de chaque sélection de condition, elle peut avoir lieu à n'importe quel moment de la programmation. La création d'une fenêtre graphique séparée de l'écran de programmation évite les contraintes liées à des menus pas à pas et permet une souplesse d'utilisation. Cette étape de paramétrage peut être évitée en affectant des paramètres par défaut à tout ou partie des conditions.

Le procédé peut comprendre une étape d'affichage d'une icône d'automatisme et de différentes icônes de type de conditions associées à l'automatisme, les icônes de type de conditions représentant les types de conditions de mise en œuvre de l'automatisme séparées par un ET logique.

Dans une étape d'affichage d'un automatisme programmé lors des étapes de configuration, on peut représenter l'automatisme sous sa forme configurée. Dans cette étape d'affichage, il ne sera ainsi pas nécessaire de représenter l'ensemble des conditions de mise en œuvre d'une action, mais uniquement les conditions séparées par un ET logique, autrement dit, les types de conditions possibles séparées par des ET logiques, et non les conditions séparées par des OU logiques (en particulier du fait de la restriction de type sur les conditions de OU logique, telle que définie plus haut. Le nombre de conditions affichées devrait donc être inférieur ou égal au nombre de conditions sélectionnées. De même, les actions relatives à l'automatisme ne sont pas affichées. Cette disposition simplifie l'affichage, permet d'afficher sur un même écran une pluralité d'automatismes complexes et leurs conditions associées. Il s'agit d'un tableau de bord des automatismes programmés. Idéalement, l'ensemble des automatismes programmés et actifs peut être affiché sur un même écran.

Le procédé peut comprendre une étape d'affichage de l'ensemble des automatismes configurés, cette étape d'affichage pouvant comprendre une étape d'affichage en surbrillance d'icônes représentant les conditions actives et/ou une étape d'affichage en surbrillance d'icônes représentant des conditions dont le statut est défini comme vrai.

Lorsque le dispositif de commande reçoit les informations utiles pour déterminer si les conditions sont remplies, l'affichage des icônes représentant les conditions peut être modifié pour faire apparaître si la condition correspondante ou l'une des conditions séparées par un OU logique est remplie. Cette modification peut par exemple être un changement de couleur de l'icône ou une surbrillance de l'icône associée à une condition ou à un ensemble de conditions séparées par un OU logique. Une absence de modification d'affichage peut traduire autrement qu'aucune condition n'est remplie.

Dans l'exemple où les conditions séparées par un ET logique sont de type différent, il ne pourra y avoir un risque de confusion entre une condition d'un premier type remplie et une autre condition du même type non remplie. Cela simplifie la mise en œuvre de l'affichage, dans la mesure où il n'est pas nécessaire d'ajouter des indications précisant par exemple le paramétrage de la condition. Cela simplifie également les icônes représentatives des conditions sélectionnées.

Le procédé peut comprendre des étapes d'activation et de désactivation d'un automatisme configuré.

Un automatisme configuré est préférentiellement par défaut actif lorsqu'il vient d'être créé. Toutefois, un utilisateur peut choisir d'activer ou de désactiver un ou plusieurs automatismes programmés. Pour cela, il peut disposer au niveau de l'interface de commande, en particulier sur un écran d'affichage de la liste des automatismes programmés, d'un sélecteur d'activation ou de désactivation de chaque automatisme.

Le procédé peut comprendre la fourniture d'au moins un automatisme préconfiguré.

Un utilisateur peut activer ou non cet automatisme préconfiguré, ou le modifier pour l'adapter à ses pratiques. Préférentiellement, une approche didactique pour comprendre et utiliser cet automatisme préconfiguré peut être mise en œuvre, notamment par le biais d'écran d'affichage montrant les bénéfices en terme de thermique, de rendement énergétique ou de sécurité du bâtiment.

Un dispositif de commande d'une installation domotique d'un bâtiment et de l'environnement du bâtiment, comprend un dispositif d'entrée de données et un dispositif d'affichage, le dispositif d'affichage comprenant par exemple un écran. Le dispositif de commande comprend des éléments matériels et/ou logiciels de mise en œuvre dudit procédé de fonctionnement défini précédemment, notamment un élément de sélection d'une icône, un élément de positionnement l'icône sélectionnée sur une zone de l'écran de représentation graphique et un élément de calcul déterminant une liste d'icônes ou de paramètres à afficher en fonction de la ou des icônes sélectionnées.

Le dispositif de commande peut comprendre un terminal, ledit terminal comprenant le dispositif d'entrée de données et le dispositif d'affichage.

Le terminal peut être un terminal mobile, en particulier une tablette tactile ou un téléphone.

L'invention concerne aussi un support d'enregistrement de données, lisible par un calculateur, sur lequel est enregistré un programme informatique comprenant des éléments de codes de programme informatique de mise en œuvre des étapes du procédé de fonctionnement défini précédemment.

L'invention concerne encore un programme informatique comprenant un élément de code de programme informatique adapté à la réalisation des étapes du procédé de fonctionnement défini précédemment, lorsque le programme tourne sur un ordinateur.

L'invention concerne enfin une installation domotique d'un bâtiment et de l'environnement du bâtiment comprenant une pluralité d'équipements domotiques et de capteurs placés dans des zones de vie à l'intérieur et à l'extérieur du bâtiment, l'installation domotique comprenant un dispositif de commande défini précédemment, l'installation comprenant un dispositif de communication au travers duquel le dispositif de commande peut piloter les équipements et les capteurs de l'installation par mise en œuvre d'un automatisme programmé.

D'autres particularités et avantages de l'invention apparaîtront encore dans la description ci-après.

Le dessin annexé représente des modes de réalisation d'un dispositif de commande selon l'invention et des modes d'exécution d'un procédé de fonctionnement selon l'invention.
La figure 1 est un schéma d'un mode de réalisation d'une installation domotique selon l'invention.
La figure 2 est un ordinogramme d'un mode de réalisation d'un procédé de fonctionnement selon l'invention.
Les figures 3 à 6 sont des vues d'affichage d'un écran du dispositif de commande dans différentes situations.

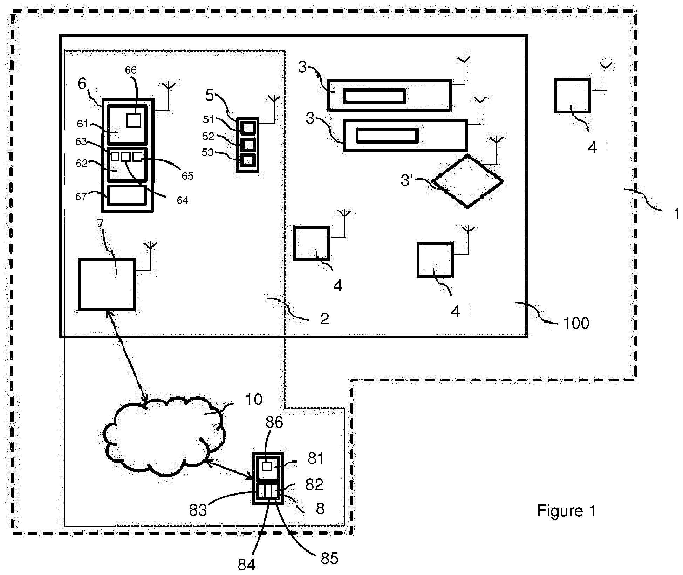

On va décrire tout d'abord, en référence à la figure 1, une installation domotique conforme à un mode de réalisation de l'invention.

L'installation domotique 1 comprend des éléments tels qu'un dispositif de commande 2, une pluralité d'équipements domotiques 3, 3' et de capteurs 4 placés dans des zones de vie à l'intérieur et à l'extérieur d'un bâtiment 100.

Les équipements domotiques 3, 3' peuvent être de différents types, comme par exemple :
- des dispositifs de fermeture, d'occultation ou de protection solaire comprenant des dispositifs d'entraînement motorisés mettant en mouvement des écrans ou éléments mobiles entre au moins une première position et une deuxième position ; et/ou
- des dispositifs d'éclairage ; et/ou
- des dispositifs de chauffage ; et/ou
- un dispositif de sécurité anti-intrusion tel qu'une alarme.

Ces équipements peuvent être commandés en utilisant des données recueillies par des capteurs 4, tels que par exemple des capteurs de température et/ou de luminosité et/ou de vent et/ou d'humidité et/ou de mouvement et/ou de fumée. Les équipements domotiques peuvent eux-mêmes comprendre des capteurs. Ces équipements peuvent alternativement ou complémentairement être commandés en utilisant des données fournies par une horloge.

Dans un mode de réalisation, le dispositif d'entraînement motorisé des dispositifs de fermeture, d'occultation ou de protection solaire comprend un actionneur électromécanique d'un écran ou élément mobile de fermeture, d'occultation ou de protection solaire tel qu'un volet, une porte, une grille, un store, ou tout autre matériel équivalent.

L'installation domotique 1 comprend également le dispositif de commande 2.

Le dispositif de commande 2 peut comprendre une ou plusieurs unités de commande locale 5, comme par exemple une télécommande comprenant plusieurs touches de commande 51, 52, 53, associée avec l'un ou plusieurs des équipements domotiques 3, 3' et communicant avec celui-ci ou ceux-ci, notamment par le biais d'un protocole radio. Le dispositif de commande comprend également une unité de commande centrale 6 communiquant, en liaison filaire ou sans fil, avec les unités de commande locales 5 et/ou avec les équipements domotiques 3, 3' et/ou avec les capteurs 4 de l'installation domotique 1.

Le dispositif de commande peut aussi comprendre également une unité de commande distante 8. Celui-ci communique avec les équipements domotiques et/ou les capteurs de l'installation par le biais d'un réseau distant 10 via Internet et par le biais d'un boîtier de connexion 7. Le boîtier de connexion 7 est également connecté au réseau distant 10 via Internet. Ainsi, l'unité de commande distante 8 permet notamment de saisir des données d'entrée de sorte à mettre en fonctionnement des équipements domotiques 3, 3' et d'afficher un état de fonctionnement de ces équipements domotiques 3, 3'. Préférentiellement, l'unité de commande distante 8 est un terminal mobile, en particulier une tablette tactile ou encore un téléphone intelligent. Les équipements domotiques 3, 3' correspondent ainsi à des charges électriques pouvant être commandées localement et à distance. Pour la communication des différents éléments de l'installation entre eux, ceux-ci sont munis d'émetteurs et/ou de récepteurs d'ordres de commande ou d'information, transmis préférentiellement selon un protocole sur un réseau non filaire, notamment radio. La communication mise en œuvre entre les éléments de l'installation peut être soit de type monodirectionnel, c'est-à-dire qu'un élément qui émet des informations ne peut pas recevoir de données, soit de type bidirectionnel, c'est-à-dire qu'un élément qui émet des informations peut également recevoir des informations.

Chacun des capteurs 4 mesure une grandeur physique et envoie à un récepteur du dispositif de commande 2, en particulier soit à une unité de commande locale 5 soit à l'unité de commande centrale 6, ou d'un récepteur d'un équipement domotique 3, 3', des données relatives à la grandeur mesurée. Les données peuvent être de type binaire pour signaler un état de fonctionnement, par exemple en fonction d'un seuil prédéterminé, ou encore de type numérique pour indiquer une valeur mesurée.

Le dispositif de commande 2 est configuré de sorte à commander le fonctionnement des équipements domotiques 3, 3' et communiquer avec les capteurs 4.

Les différents éléments de l'installation comprennent des unités électroniques de commande, par exemple un circuit imprimé muni d'un microcontrôleur et d'une mémoire, de sorte à pouvoir effectuer des calculs et stocker des données, notamment de sorte à régir leurs fonctionnements, ainsi que de gérer les communications au travers des émetteurs et récepteurs.

L'unité de commande centrale 6 comprend un dispositif d'affichage 61, notamment un écran d'affichage, un dispositif de saisie 62 et un élément de calcul ou unité logique de traitement 66.

Le dispositif de saisie 62 comprend un élément de sélection 63, un élément de positionnement 64 et des éléments de navigation et de validation 65. Le dispositif d'affichage comprend des éléments d'affichage 66.

De la même manière, l'unité de commande distante 8 comprend un dispositif d'affichage 81 et un dispositif de saisie 82, ainsi qu'un élément de sélection 83, un élément de positionnement 84, des éléments de navigation et de validation 85 et des éléments d'affichage 86.

Dans un mode de réalisation, l'élément de sélection, l'élément de positionnement et les éléments d'affichage de l'unité de commande centrale ou distante sont réalisés au moyen d'un écran tactile 61.

Bien entendu, le mode de réalisation des éléments de sélection, de positionnement et d'affichage n'est nullement limitatif et peut être différent, en particulier réalisé au moyen de boutons poussoirs ou de touches sensitives pour l'élément de sélection et l'élément de positionnement ou au moyen d'un afficheur LCD (acronyme du terme anglo-saxon « Liquid Crystal Display ») ou TFT (acronyme du terme anglo-saxon « Thin Film Transistor ») pour l'élément d'affichage.

L'ensemble des unités électroniques de commande des éléments domotiques de l'installation et des émetteurs et récepteurs constitue un dispositif de communication au travers duquel le dispositif de commande peut transmettre des informations vers les équipements et les capteurs de l'installation, peut recevoir des informations des équipements et des capteurs de l'installation et mettre en œuvre un automatisme configuré.

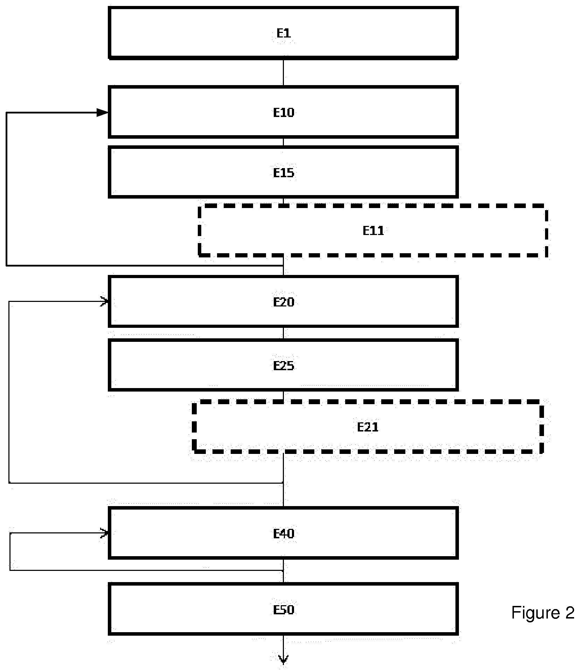

Dans tout ce document, par « automatisme », on entend un ensemble d'au moins une action ou commande exécutable par un équipement domotique et d'au moins une condition d'exécution de cette action ou commande. Cet ensemble est généré par une sélection d'icônes représentatives de l'action, de la commande ou de la condition. L'activation de l'automatisme provoque la mise en œuvre de l'action ou de la commande sous condition. La figure 2 illustre les étapes d'un mode d'exécution d'un procédé de configuration d'un automatisme, notamment d'un nouvel automatisme. Ce nouvel automatisme est généré au cours d'une étape E1. Toutefois, les étapes suivantes sont au moins partiellement similaires dans le cas de la modification d'un automatisme existant.

Ces étapes de configuration comprennent une étape de sélection E10 d'une première icône de condition, c'est-à-dire une première icône représentant ou associée à une première condition de mise en œuvre ou d'exécution d'une action relative à l'installation parmi un ensemble COND proposé d'icônes de conditions.

Une icône de condition est définie notamment par un type de condition et par une ou plusieurs valeurs, par exemple une plage de valeurs. Elle est représentée par une icône graphique et, éventuellement, un texte alphanumérique associé.

Les conditions peuvent être choisies parmi des types de conditions par exemple définis relativement à des informations suivantes :
- information de temps ou horaire,
- information météorologique ou climatique,
- information de position ou de statut d'un équipement de l'installation, par exemple position d'une extrémité inférieure d'un écran ou statut ouvert ou fermé de d'un écran,
- information de mesure ou de statut d'un capteur,
- information relative à un utilisateur,
- information de localisation, notamment information de localisation géographique d'un élément de commande, en particulier information de position géographique d'une unité de commande distante.

La sélection peut être réalisée notamment par :
- positionnement d'un curseur sur l'icône et, éventuellement, une étape ultérieure de validation ; ou
- pression ou contact exercé par un utilisateur sur une zone de l'écran où est affichée l'icône. Toute autre procédure de sélection peut être utilisée. Pour effectuer cette sélection, l'utilisateur utilise l'élément de sélection 63.

Une fois l'icône de condition sélectionnée, celle-ci est positionnée ou déplacée au cours d'une étape de positionnement E15 dans une table matricielle TMAT destinée à accueillir les icônes de conditions. Cette table matricielle comprend notamment des zones C1-C6 arrangées en lignes et colonnes et sur lesquelles peuvent être positionnée la première icône sélectionnée. Les lignes et colonnes peuvent être arrangées orthogonalement. Alternativement, elles peuvent former un angle différent de 90°. En pratique, la première icône sera positionnée dans la zone en haut à gauche de la table matricielle, manuellement ou automatiquement. Alternativement, aucune contrainte n'est fournie sur le positionnement de cette première icône dans la table matricielle. Le positionnement peut être réalisé notamment par :
- déplacement d'un point de contact entre l'utilisateur et l'écran d'une zone de l'écran où est affichée l'icône à une zone C1-C6. L'icône reste alors positionnée dans la zone C1-C6 où le contact a été rompu entre l'utilisateur et l'écran, en particulier entre l'utilisateur et l'élément de positionnement 64. Eventuellement, une étape ultérieure de validation est requise.

Pour effectuer ce positionnement, l'utilisateur utilise l'élément de positionnement 64.

Ces étapes de sélection et de positionnement peuvent être suivies immédiatement ou ultérieurement d'une étape E11 de paramétrage de la première condition sélectionnée. Dans cette étape, l'utilisateur va par exemple définir une valeur numérique ou logique relativement à l'information associée à la condition, cette valeur permettant de déterminer quand la condition est réalisée et quand elle ne l'est pas.

Une nouvelle étape de sélection E20 d'une deuxième icône de condition, représentant une deuxième condition de mise en œuvre d'une action relative à l'installation est ensuite mise en œuvre. Une fois la deuxième icône de condition sélectionnée, celle-ci est positionnée au cours d'une deuxième étape de positionnement E25 dans la table matricielle TMAT accueillant les icônes de conditions. Cette deuxième icône peut alors être positionnée sur une même ligne ou une même colonne que l'icône représentant la première condition dans la table matricielle. De même que pour la première icône, une étape E21 de paramétrage de la deuxième condition sélectionnée peut avoir lieu.

Dans le cas où les icônes sont positionnées sur une même ligne de la table matricielle, les deux conditions correspondant aux icônes de la table sont considérées comme reliées par un « OU » logique. Dans le cas où les icônes sont positionnées sur une même colonne de la table matricielle, les deux conditions correspondant aux icônes de la table sont considérées comme séparées par un « ET » logique. Une logique inverse peut toutefois être envisagée. La logique de lecture des conditions est préalablement définie. Elle est par exemple fixée à demeure et/ou lors de la fabrication de l'unité 6 de commande centrale. Ainsi, l'ordre de lecture des icônes, mais aussi les priorités des liens logiques les uns par rapport aux autres peuvent être fixés préalablement, notamment lors de la fabrication et/ou à demeure. Par exemple, en supposant des icônes associées à des conditions c1 à c6 respectivement disposées sur les zones C1 à C6 se lit selon la formule logique :
(C1 OU C4) ET (C2 OU C5) ET (C3 OU C6)

La table matricielle comprend préférentiellement 3 lignes et 2 colonnes.

Des restrictions peuvent être appliquées sur la sélection ou le positionnement de l'icône représentant la deuxième condition, notamment en fonction de la première condition sélectionnée. En particulier, une restriction de type peut être appliquée : les conditions séparées par des OU logiques sont préférentiellement restreintes à être des conditions de même type. Par exemple si une première condition de température est sélectionnée, alors une deuxième condition de température pourra être sélectionnée et positionnée dans la table matricielle sur une même ligne (les deux conditions étant alors séparées par un OU logique). En revanche, une deuxième condition de luminosité ne pourra être positionnée sur cette même ligne.

Les conditions séparées par des ET logiques sont préférentiellement restreintes à être des conditions de type différent. Par exemple si une première condition de température est sélectionnée, alors une deuxième condition horaire pourra être sélectionnée et positionnée dans la table matricielle sur une même colonne (les deux conditions étant alors séparées par un ET logique). En revanche, une deuxième condition de température ne pourra être positionnée sur cette même colonne, mais plutôt sur une autre ligne.

Les étapes de sélection E20 et de positionnement E25 sont réitérées autant de fois que le nombre de conditions désiré pour la mise en œuvre de l'action. Une restriction du nombre de condition peut être donnée par les dimensions (nombre de lignes et de colonnes) de la table matricielle. L'ensemble des conditions sélectionnées forme une condition composite.

Le procédé comprend également au moins une étape de sélection et de positionnement E40 d'une icône représentant une première action relative à l'installation parmi un premier ensemble ACT proposé d'actions. Cette action est associée à la condition composite contenue et définie dans la table matricielle TMAT à partir d'au moins deux conditions élémentaires représentées par des icônes.

Une action peut être choisie parmi les types d'actions suivants :
- changement d'état d'un équipement, activation d'un mode de fonctionnement préprogrammé de l'installation,
- lancement d'un scénario,
- envoi d'une alerte.

Cette étape E40 peut être réalisée avant ou après la ou les étapes de sélection E10, E20 et de positionnement E15, E25 des conditions. L'icône d'action sélectionnée est positionnée dans une table d'actions TACT, comprenant des zones A1, A2, A3 arrangées en colonne et sur lesquelles peut être positionnée l'icône d'action sélectionnée. Ces étapes de sélection et de positionnement sont réitérées autant de fois que le nombre d'actions désirées pour la mise en œuvre de l'automatisme. Une restriction du nombre d'actions peut être nécessitée par les dimensions (nombre de colonnes) de la table des actions. Les techniques de sélection et de positionnement des icônes d'action peuvent être les mêmes que celles utilisées pour la sélection et le positionnement des icônes de condition.

Des restrictions peuvent également être appliquées sur la sélection ou le positionnement d'icônes représentant des actions, notamment en fonction d'une première sélection d'une icône d'action. Il pourra être déterminé que les différentes actions sélectionnées ne peuvent être que de types différents. On peut alternativement ne mettre cette contrainte que pour un type d'action, par exemple, le lancement d'un scénario. Ainsi, on peut garder la possibilité de pouvoir commander différents équipements indépendants, sans nécessairement créer de groupe spécifique pour un même ensemble de conditions.

Lorsque l'ensemble des conditions et des actions souhaitées est positionnée dans la table matricielle TMAT et dans la table des actions TACT, et que les conditions sont paramétrées selon le souhait de l'utilisateur du bâtiment 100, une étape E50 d'enregistrement de la configuration de l'automatisme a lieu.

Au cours de ce mode d'exécution de procédé, les étapes de sélection et de positionnement peuvent donc comprendre une étape de glisser-déposer d'une icône d'un ensemble COND de conditions ou d'un ensemble ACT d'actions vers une zone d'affichage de la table matricielle ou de la table des actions.

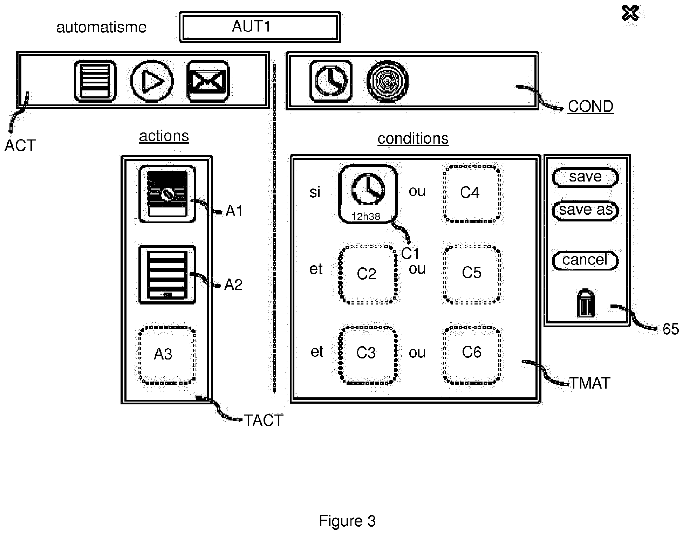

La figure 3 représente une vue de l'écran d'affichage lors de la configuration d'un nouvel automatisme. Deux icônes d'actions, issues de l'ensemble ACT d'icônes d'actions ont été sélectionnées et positionnées dans des zones A1 et A2 de la table des actions destinées à accueillir des icônes d'action. Une icône de condition horaire a été sélectionnée et positionnée dans la zone C1 de la table matricielle. Les autres zones sont vides.

Un élément de sélection peut être un pointeur ou curseur ou un élément de détection du doigt d'un utilisateur dans le cas d'un écran tactile. Une icône est alors copiée depuis un ensemble de conditions COND ou d'actions ACT, vers une zones de la table matricielle des conditions ou de la table d'actions. Des éléments de navigation et de validation 65 sont également représentés. Ceux-ci servent notamment à l'enregistrement de l'automatisme configuré, à l'effacement de celui-ci ou à l'effacement d'un positionnement non désirée.

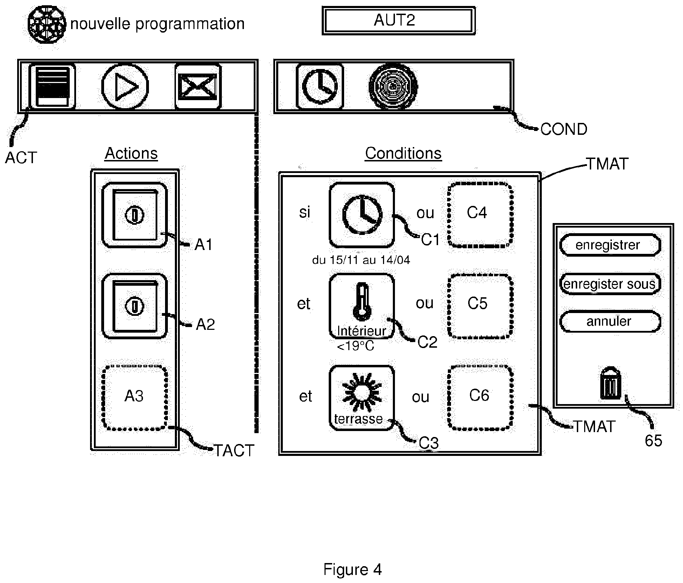

La figure 4 représente une autre vue de l'écran d'affichage lors de la configuration d'un nouvel automatisme. Deux icônes d'actions, issues de l'ensemble ACT d'icônes d'actions ont été sélectionnées et positionnées dans les zones A1 et A2 de la table des actions. Une première icône de condition horaire a été sélectionnée et positionnée dans la zone C1 de la table matricielle. Une deuxième icône de condition de température a été sélectionnée et positionnée dans la zone C2 de la table matricielle. Une troisième icône de condition d'ensoleillement a été sélectionnée et positionnée dans la zone C3 de la table matricielle. Ces trois icônes sont de types différents et sont séparées par des ET logiques. Elles respectent donc une éventuelle restriction de type sur les icônes séparées par des ET logiques. En pratique, ces conditions ne peuvent être de même type. Si la dernière icône sélectionnée était du même type qu'une des première ou deuxième icônes de condition de la table matricielle, alors son positionnement dans la zone A3 pourrait être refusé.

De la même manière, si une nouvelle icône de condition était sélectionnée et positionnée sur la même ligne qu'une autre condition et que ces deux icônes soient de type différent, alors le positionnement de la nouvelle icône sur la ligne pourrait être refusé.

Lors de ces refus, un message d'erreur pourrait être transmis à l'utilisateur, expliquant la restriction sur les différentes conditions.

Lors de l'exécution de l'automatisme, les différentes actions peuvent être exécutées simultanément ou successivement.

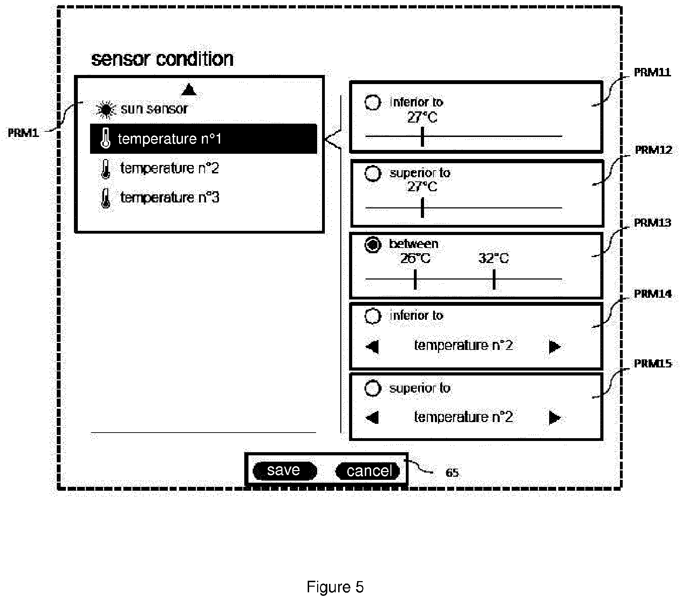

La figure 5 représente un écran de paramétrage, sous forme d'une fenêtre graphique séparée comprenant des informations de paramétrage. Cette fenêtre graphique affiche un premier niveau de paramétrage sélectionnable PRM1, qui peut correspondre notamment à un choix d'information, notamment de mesure physique, associé au capteur. Dans l'exemple, le premier niveau de paramétrage correspond à un niveau de température pour un capteur solaire. Le deuxième niveau de paramétrage correspond à une valeur de température ou une plage de valeurs de température. Ce deuxième niveau de paramétrage comprend plusieurs options PRM11-PRM15 pouvant être sélectionnées par la personne réalisant la configuration de l'automatisme. Pour chaque option PRM11-PRM15, la valeur ou les valeurs des bornes des plages peuvent être modifiées par simple glissement d'un curseur sur une ligne, ou par une saisie de valeur.

La fenêtre graphique affiche également des éléments de navigation et de validation 65, permettant de sauvegarder le paramétrage ou d'annuler les modifications de paramétrage.

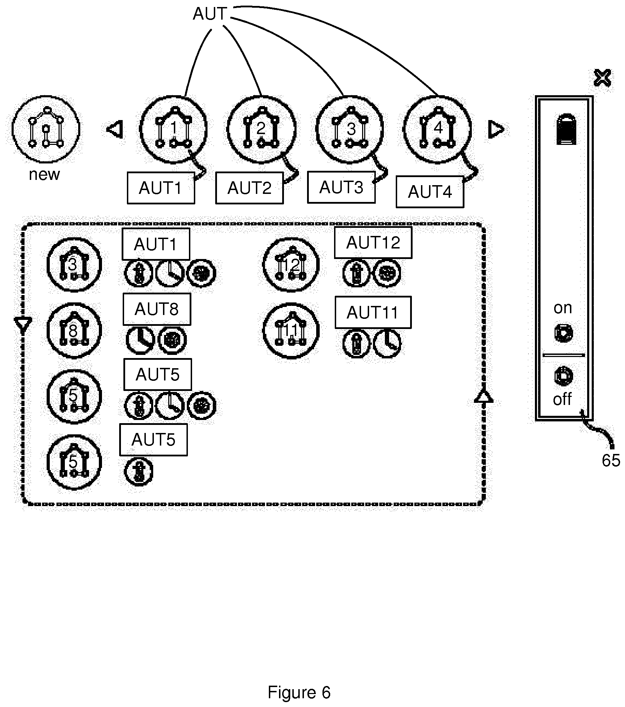

La figure 6 illustre une étape d'affichage des différents automatismes configurés et sauvegardés. Chaque automatisme est caractérisé par une icône AUT et un texte nommant l'automatisme. Différentes icônes de conditions associés à l'automatisme sont affichées à proximité de l'icône d'automatisme. Parmi les icônes de conditions, seules les icônes représentant les types de conditions de mise en œuvre d'une action séparées par un ET logique sont représentées. Les icônes d'actions ne sont également pas représentées.

Cette étape d'affichage consiste donc à offrir un tableau de bord des différents automatismes actifs, et permet de visualiser notamment si l'une ou l'autre ou l'ensemble des conditions sont remplies. Pour cela, l'affichage de chaque icône de condition relative à un automatisme peut être modifié pour faire apparaître si la condition C1, C2, C3 correspondante (ou l'une des conditions séparées par un OU logique) est remplie. Cette modification peut être une surbrillance de l'icône, par exemple un changement de couleur de l'icône associée à une condition ou à un ensemble de conditions séparées par un OU logique. Une absence de modification d'affichage traduit autrement que la condition n'est pas remplie.

Au cours de cette étape d'affichage, des éléments de navigation et de validation 65 sont configurés de sorte à activer ou désactiver un ou plusieurs automatismes programmés.

Selon un mode de réalisation, au moins un automatisme préconfiguré est proposé par défaut. Un utilisateur peut activer ou non cet automatisme préconfiguré, ou le modifier pour l'adapter à ses pratiques.

Dans la description qui précède, les termes « première icône » et « deuxième icône » ont un sens chronologique, la deuxième icône étant sélectionnée après, dans le temps, la sélection de la première icône.

Afin de permettre la mise en œuvre de l'invention, le dispositif de commande selon l'invention comprend tous les éléments matériels et/ou logiciel mettant en œuvre des étapes ou toutes les étapes du procédé de fonctionnement selon l'invention. Notamment, le dispositif comprend :
- Un élément de sélection d'une icône représentant une première condition de mise en œuvre d'une action relative à l'installation parmi un ensemble proposé d'icônes de conditions,
- Un élément de positionnement de la première condition sélectionnée dans une table matricielle accueillant les icônes de conditions,
- Un élément de sélection d'une icône représentant une deuxième condition de mise en œuvre d'une action relative à l'installation,
- Un élément de positionnement de l'icône représentant la deuxième condition sur une même ligne ou une même colonne que l'icône représentant la première condition dans la table matricielle.

Un même élément peut permettre de mettre en œuvre plusieurs étapes.

L'information de localisation géographique ou de position géographique peut être connue par l'utilisation d'un réseau local sans fil ou par l'utilisation d'un réseau de téléphonie sans fil ou par l'utilisation d'un dispositif GPS.

## Revendications

1. Procédé de fonctionnement d'un dispositif de commande (2) d'une installation domotique (1) d'un bâtiment et de l'environnement du bâtiment, l'installation domotique (1) comprenant une pluralité d'équipements domotiques (3, 3') et de capteurs (4) placés dans des zones de vie à l'intérieur et/ou à l'extérieur du bâtiment, le dispositif de commande (2) comprenant un dispositif (62) d'entrée de données et un dispositif (61) d'affichage, le dispositif d'affichage (61) comprenant un écran de représentation graphique (66), le dispositif de commande (2) étant configuré de sorte à commander le fonctionnement des équipements domotiques (3, 3') et communiquer avec les capteurs (4), **caractérisé en ce que** ledit procédé comprend au moins les étapes de configuration d'un automatisme suivantes, l'automatisme étant défini par au moins deux conditions de mise en œuvre d'une action ainsi que l'action elle-même:
- sélection (E10) d'une icône représentant une première condition de mise en œuvre de l'action relative à l'installation parmi un ensemble proposé d'icônes de conditions,
- positionnement (E15) de la première condition sélectionnée dans une table matricielle (TMAT) accueillant les icônes de conditions,
- sélection (E20) d'une icône représentant une deuxième condition de mise en œuvre de l'action relative à l'installation,
- positionnement (E25) de l'icône représentant la deuxième condition sur une même ligne ou une même colonne que l'icône représentant la première condition dans la table matricielle,
la première et la deuxième conditions étant séparées par un OU logique et/ou la première et la deuxième conditions étant séparées par un ET logique selon si les icônes de conditions sont positionnées respectivement en ligne ou en colonne.

2. Procédé de fonctionnement selon l'une des revendications précédentes, **caractérisé en ce que** la sélection de l'icône représentant la deuxième condition est dépendante de la première condition sélectionnée.

3. Procédé de fonctionnement selon l'une des revendications précédentes, **caractérisé en ce que** lesdites étapes de sélection (E10, E20) et de positionnement (E15, E25) sont réitérées autant de fois que le nombre de conditions désiré pour la mise en œuvre de l'action, le procédé étant par exemple tel que le nombre de conditions possibles, séparées par un ET logique, est inférieur ou égal à 3.

4. Procédé de fonctionnement selon l'une des revendications précédentes, **caractérisé en ce que** qu'une condition est choisie parmi des types de conditions définis relativement à des informations suivantes:
- information de temps ou horaire,
- information météorologique ou climatique,
- information de position ou de statut d'un équipement de l'installation, par exemple position d'une extrémité inférieure d'un écran ou statut ouvert ou fermé d'un écran,
- information de mesure ou de statut d'un capteur,
- information relative à un utilisateur
- information de localisation, notamment information de localisation géographique d'un élément de commande, en particulier information de position géographique d'une unité de commande distante.

5. Procédé de fonctionnement selon l'une des revendications précédentes, **caractérisé en ce qu'**il comprend au moins une étape de paramétrage de la première condition et/ou de la deuxième condition sélectionnée.

6. Procédé de fonctionnement selon l'une des revendications précédentes, **caractérisé en ce qu'**il comprend au moins une étape de sélection et de positionnement (E40) d'une icône représentant une première action relative à l'installation parmi un premier ensemble proposé d'actions, le procédé étant par exemple tel que ladite étape de sélection et de positionnement (E40) d'une action est réitérée autant de fois que le nombre d'action désiré pour un même ensemble de conditions.

7. Procédé de fonctionnement selon la revendication 6, **caractérisé en ce qu'**une action est choisie parmi les types d'actions suivants :
- changement d'état d'un équipement, activation d'un mode de fonctionnement préprogrammé de l'installation,
- lancement d'un scénario,
- envoi d'une alerte.

8. Procédé de fonctionnement selon l'une des revendications précédentes, **caractérisé en ce que** lesdites étapes de sélection et de positionnement comprennent une étape de glisser-déposer d'une icône d'un ensemble vers une zone d'affichage.

9. Procédé de fonctionnement selon l'une des revendications précédentes, **caractérisé en ce qu'**il comprend une étape d'affichage d'une icône d'automatisme et de différentes icônes de type de conditions associées à l'automatisme, les icônes de type de conditions représentant les types de conditions de mise en œuvre de l'automatisme séparées par un ET logique.

10. Procédé de fonctionnement selon l'une des revendications précédentes, **caractérisé en ce qu'**il comprend la fourniture d'au moins un automatisme préconfiguré.

11. Dispositif de commande (2) d'une installation domotique (1) d'un bâtiment et de l'environnement du bâtiment, ledit dispositif de commande (2) comprenant un dispositif (62) d'entrée de données et un dispositif (61) d'affichage, le dispositif (61) d'affichage comprenant par exemple un écran (66), **caractérisé en ce que** ledit dispositif de commande (2) comprend des éléments (6, 61, 62, 63, 64, 65, 66, 67) matériels et/ou logiciels de mise en œuvre dudit procédé de fonctionnement conforme à l'une quelconque des revendications précédentes, notamment un élément (63) de sélection d'une icône, un élément (64) de positionnement l'icône sélectionnée sur une zone de l'écran de représentation graphique et un élément de calcul (67) déterminant une liste d'icônes ou de paramètres à afficher en fonction de la ou des icônes sélectionnées.

12. Dispositif de commande (2) d'une installation domotique (1) d'un bâtiment et de l'environnement du bâtiment selon la revendication précédente, **caractérisé en ce que** ledit dispositif de commande (2) comprend un terminal (6), ledit terminal (6) comprenant le dispositif (62) d'entrée de données et le dispositif (61) d'affichage, ledit terminal (6) étant par exemple un terminal mobile, en particulier une tablette tactile ou un téléphone.

13. Programme informatique comprenant un élément de code de programme informatique adapté à la réalisation des étapes du procédé de fonctionnement selon l'une des revendications 1 à 10, lorsque le programme tourne sur un ordinateur.

14. Installation domotique (1) d'un bâtiment (100) et de l'environnement du bâtiment comprenant une pluralité d'équipements domotiques (3, 3') et de capteurs (4) placés dans des zones de vie à l'intérieur et à l'extérieur du bâtiment, l'installation domotique comprenant un dispositif de commande (2) selon l'une des revendications 11 à 12, l'installation comprenant un dispositif de communication au travers duquel le dispositif de commande peut piloter les équipements et les capteurs de l'installation par mise en œuvre d'un automatisme programmé.

## Patentansprüche

1. Betriebsverfahren einer Steuervorrichtung (2) einer Haustechnikanlage (1) eines Gebäudes und der Umgebung des Gebäudes, wobei die Haustechnikanlage (1) eine Vielzahl von Haustechnikeinrichtungen (3, 3') und Sensoren (4) umfasst, die in Lebensbereichen innerhalb und/oder außerhalb des Gebäudes angeordnet sind, wobei die Steuervorrichtung (2) eine Dateneingabevorrichtung (62) und eine Anzeigevorrichtung (61) umfasst, wobei die Anzeigevorrichtung (61) ein Grafikdisplay (66) umfasst, wobei die Steuervorrichtung (2) so konfiguriert ist, dass sie den Betrieb der Haustechnikeinrichtungen (3, 3') steuert und mit den Sensoren (4) kommuniziert, **dadurch gekennzeichnet, dass** das Verfahren mindestens die folgenden Schritte zur Konfiguration eines Automatismus umfasst, wobei der Automatismus durch mindestens zwei Ausführungsbedingungen eines Vorgangs sowie den Vorgang selbst definiert ist:
- Auswählen (E10) eines Piktogramms, das eine erste Ausführungsbedingung des Vorgangs bezüglich der Anlage repräsentiert, unter einer vorgeschlagenen Gruppe von Bedingungspiktogrammen,
- Platzieren (E15) der ersten ausgewählten Bedingung in einer Matrixtabelle (TMAT), welche die Bedingungspiktogramme aufnimmt,
- Auswählen (E20) eines Piktogramms, das eine zweite Ausführungsbedingung des Vorgangs bezüglich der Anlage repräsentiert,
- Platzieren (E25) des Piktogramms, das die zweite Bedingung repräsentiert, in derselben Zeile oder derselben Spalte der Matrixtabelle wie das Piktogramm, das die erste Bedingung repräsentiert,
wobei die erste und die zweite Bedingung durch ein logisches ODER getrennt sind und/oder die erste und die zweite Bedingung durch ein logisches UND getrennt sind, je nachdem, ob die Bedingungspiktogramme zeilenweise oder spaltenweise platziert werden.

2. Betriebsverfahren nach Anspruch 1, **dadurch gekennzeichnet, dass** das Auswählen des Piktogramms, das die zweite Bedingung repräsentiert, von der ersten ausgewählten Bedingung abhängig ist.

3. Betriebsverfahren nach einem der vorhergehenden Ansprüche, **dadurch gekennzeichnet, dass** die Schritte des Auswählens (E10, E20) und Platzierens (E15, E25) so oft wiederholt werden, wie Bedingungen zum Ausführen des Vorgangs gewünscht sind, wobei das Verfahren beispielsweise dergestalt ist, dass die Anzahl möglicher Bedingungen, die durch ein logisches UND getrennt sind, kleiner oder gleich 3 ist.

4. Betriebsverfahren nach einem der vorhergehenden Ansprüche, **dadurch gekennzeichnet, dass** eine Bedingung unter Bedingungsarten gewählt wird, die bezüglich folgender Informationen definiert sind:
- Zeit- oder Uhrzeitinformation,
- Wetter- oder Klimainformation,
- Positions- oder Zustandsinformation einer Einrichtung der Anlage, zum Beispiel Position eines unteren Endes eines Sonnenschutzes oder offener oder geschlossener Zustand eines Sonnenschutzes,
- Mess- oder Zustandsinformation eines Sensors,
- Information über einen Benutzer,
- Lageinformation, insbesondere Information zur geografischen Lage eines Steuerelements, insbesondere Information zur geografischen Lage einer Fernsteuereinheit.

5. Betriebsverfahren nach einem der vorhergehenden Ansprüche, **dadurch gekennzeichnet, dass** es mindestens einen Schritt des Parametrierens der ersten Bedingung und/oder der zweiten ausgewählten Bedingung umfasst.

6. Betriebsverfahren nach einem der vorhergehenden Ansprüche, **dadurch gekennzeichnet, dass** es mindestens einen Schritt des Auswählens und Platzierens (E40) eines Piktogramms, das einen ersten Vorgang bezüglich der Anlage repräsentiert, unter einer ersten vorgeschlagenen Gruppe von Vorgängen umfasst, wobei das Verfahren beispielsweise dergestalt ist, dass der Schritt des Auswählens und Platzierens (E40) eines Vorgangs so oft wiederholt wird, wie Vorgänge für dieselbe Gruppe von Bedingungen gewünscht sind.

7. Betriebsverfahren nach Anspruch 6, **dadurch gekennzeichnet, dass** ein Vorgang unter den folgenden Vorgangsarten gewählt wird:
- Ändern des Zustands einer Einrichtung, Aktivieren einer vorprogrammierten Betriebsart der Anlage,
- Starten eines Szenarios,
- Senden eines Alarms.

8. Betriebsverfahren nach einem der vorhergehenden Ansprüche, **dadurch gekennzeichnet, dass** die Schritte des Auswählens und Platzierens einen Schritt des Ziehens/Ablegens eines Piktogramms einer Gruppe zu einem Anzeigebereich hin umfassen.

9. Betriebsverfahren nach einem der vorhergehenden Ansprüche, **dadurch gekennzeichnet, dass** es einen Schritt des Anzeigens eines Automatismuspiktogramms und von verschiedenen dem Automatismus zugeordneten Bedingungsartpiktogrammen umfasst, wobei die Bedingungsartpiktogramme die Ausführungsbedingungsarten des Automatismus repräsentieren, die durch ein logisches UND getrennt sind.

10. Betriebsverfahren nach einem der vorhergehenden Ansprüche, **dadurch gekennzeichnet, dass** es die Bereitstellung mindestens eines vorkonfigurierten Automatismus umfasst.

11. Steuervorrichtung (2) einer Haustechnikanlage (1) eines Gebäudes und der Umgebung des Gebäudes, wobei die Steuervorrichtung (2) eine Dateneingabevorrichtung (62) und eine Anzeigevorrichtung (61) umfasst, wobei die Anzeigevorrichtung (61) zum Beispiel ein Display (66) umfasst, **dadurch gekennzeichnet, dass** die Steuervorrichtung (2) Hardwareelemente (6, 61, 62, 63, 64, 65, 66, 67) und/oder Softwareelemente zum Ausführen des Betriebsverfahrens nach einem der vorhergehenden Ansprüche umfasst, insbesondere ein Element (63) zum Auswählen eines Piktogramms, ein Element (64) zum Platzieren des ausgewählten Piktogramms in einem Bereich des Grafikdisplays und ein Rechenelement (67), das eine Liste von Piktogrammen oder Parametern bestimmt, die in Abhängigkeit von dem oder den ausgewählten Piktogrammen anzuzeigen sind.

12. Steuervorrichtung (2) einer Haustechnikanlage (1) eines Gebäudes und der Umgebung des Gebäudes nach dem vorhergehenden Anspruch, **dadurch gekennzeichnet, dass** die Steuervorrichtung (2) ein Endgerät (6) umfasst, wobei das Endgerät (6) die Dateneingabevorrichtung (62) und die Anzeigevorrichtung (61) umfasst, wobei das Endgerät (6) beispielsweise ein mobiles Endgerät ist, insbesondere ein Tablet oder ein Telefon.

13. Computerprogramm, das ein Computerprogrammcodeelement umfasst, das zur Ausführung der Schritte des Betriebsverfahrens nach einem der Ansprüche 1 bis 10 eingerichtet ist, wenn das Programm auf einem Computer läuft.

14. Haustechnikanlage (1) eines Gebäudes (100) und der Umgebung des Gebäudes, umfassend eine Vielzahl von Haustechnikeinrichtungen (3, 3') und Sensoren (4), die in Lebensbereichen innerhalb und außerhalb des Gebäudes angeordnet sind, wobei die Haustechnikanlage eine Steuervorrichtung (2) nach einem der Ansprüche 11 bis 12 umfasst, wobei die Anlage eine Kommunikationsvorrichtung umfasst, über welche die Steuervorrichtung die Einrichtungen und Sensoren der Anlage durch Ausführen eines programmierten Automatismus ansteuern kann.

## Claims

1. Method for operating a control device (2) of a home automation installation (1) of a building and of the environment of the building, the home automation installation (1) comprising a plurality of home automation equipment items (3, 3') and sensors (4) placed in living areas inside and/or outside the building, the control device (2) comprising a data input device (62) and a display device (61), the display device (61) comprising a graphic representation screen (66), the control device (2) being configured so as to control the operation of the home automation equipment items (3, 3') and communicate with the sensors (4), **characterized in that** said method comprises at least the following automatic operation configuration steps, the automatic operation being defined by at least two conditions of implementation of an action by the action:
- selection (E10) of an icon representing a first condition of implementation of the action relating to the installation out of a proposed set of condition icons,
- positioning (E15) of the first selected condition in a matrix table (TMAT) accommodating the condition icons,
- selection (E20) of an icon representing a second condition of implementation of the action relating to the installation,
- positioning (E25) of the icon representing the second condition on a same row or a same column as the icon representing the first condition in the matrix table,
the first and the second conditions are separated by a logical OR and/or the first and the second condition are separated by a logical AND depending on whether the condition icons are positioned respectively in a row or in a column.

2. Operating method according to claim 1, **characterized in that** the selection of the icon representing the second condition is dependent on the first condition selected.

3. Operating method according to one of the preceding claims, **characterized in that** said steps of selection (E10, E20) and of positioning (E15, E25) are reiterated as many times as there are number of conditions desired for the implementation of the action, the method being for example such that the number of possible conditions, separated by a logical AND, is less than or equal to 3.

4. Operating method according to one of the preceding claims, **characterized in that** a condition is chosen from the types of conditions defined relative to the following information:
- time information,
- weather or climate information,
- installation equipment item position or status information, for example position of the low extremity of a screen or open or closed status of a screen,
- measure information of a sensor or status information of a sensor,
- information relating to a user,
- locating information, notably geographic locating information of a control element, in particular geographic position information of a remote control unit.

5. Operating method according to one of the preceding claims, **characterized in that** it comprises at least one step of parameterizing the first condition and/or the second condition selected.

6. Operating method according to one of the preceding claims, **characterized in that** it comprises at least one step of selection and of positioning (E40) of an icon representing a first action relating to the installation out of a first proposed set of actions, the method being for example such that said step of selection and of positioning (E40) of an action is reiterated as many times as there are number of actions desired for one and the same set of conditions.

7. Operating method according to Claim 6, **characterized in that** an action is chosen from the following types of actions:
- change of state of an equipment item, activation of a preprogrammed mode of operation of the installation,
- launching of a scenario,
- sending of an alert.

8. Operating method according to one of the preceding claims, **characterized in that** said steps of selection and of positioning comprise a step of dragging-dropping of an icon from a set to a display area.

9. Operating method according to one of the preceding claims, **characterized in that** it comprises a step of display of an automatic operation icon and of different condition type icons associated with the automatic operation, the condition type icons representing the types of conditions of implementation of the automatic operation separated by a logical AND.

10. Operating method according to one of the preceding claims, **characterized in that** it comprises the provision of at least one preconfigured automatic operation.

11. Control device (2) of a home automation installation (1) of a building and of the environment of the building, said control device (2) comprising a data input device (62) and a display device (61), the display device (61) comprising, for example, a screen (66), **characterized in that** said control device (2) comprises hardware and/or software elements (6, 61, 62, 63, 64, 65, 66, 67) for implementing said operating method according to any one of the preceding claims, notably an element (63) for selecting an icon, an element (64) for positioning the selected icon on an area of the graphic representation screen and a computation element (67) determining a list of icons or of parameters to be displayed as a function of the selected icon or icons.

12. Control device (2) of a home automation installation (1) of a building and of the environment of the building according to the preceding claim, **characterized in that** said control device (2) comprises a terminal (6), said terminal (6) comprising the data input device (62) and the display device (61), said terminal (6) being for example a mobile terminal, in particular a touch tablet or a telephone.

13. Computer program comprising a computer program code element suitable for performing the steps of the operating method according to one of Claims 1 to 10, when the program runs on a computer.

14. Home automation installation (1) of a building (100) and of the environment of the building comprising a plurality of home automation equipment items (3, 3') and sensors (4) placed in living areas inside and outside the building, the home automation installation comprising a control device (2) according to one of Claims 11 to 12, the installation comprising a communication device through which the control device can drive the equipment items and the sensors of the installation by the implementation of a programmed automatic operation.
